(19)

Europäisches
Patentamt
European
Patent Office
Office européen
des brevets

(11) **EP 2 259 221 A1**

(12) **EUROPEAN PATENT APPLICATION**

(43) Date of publication:
**08.12.2010 Bulletin 2010/49**

(51) Int Cl.:
***G06T 7/20*** (2006.01)

(21) Application number: **09007346.1**

(22) Date of filing: **03.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **ETH Zurich
8092 Zürich (CH)**

(72) Inventors:
- **Breitenstein, Michael
  8006 Zürich (CH)**
- **Reichlin, Fabian
  8004 Zürich (CH)**
- **Leibe, Bastian
  52072 Aachen (DE)**
- **Koller-Meier, Esther
  8049 Zürich (CH)**
- **Van Gool, Luc
  8006 Zürich (CH)**

(54) **Computer system and method for tracking objects in video data**

(57)     For tracking objects in a sequence of video frames, an object detector (11) detects objects, and a data association (112) is established between an object tracker (121) and a detection (110) by evaluating online (on-the-fly) trained instance-specific classifiers for each object For tracking (52) the detected objects (110), particle filtering is employed by determining weights of importance for the particles associated with an object tracker, and by propagating the particles using a motion model. For the positions of the particle associated with an object tracker, the detector confidence (111) is determined from the object detector, and the weights of importance are determined for the particles based on the detector confidence at the positions of the particles. By exploiting the intermediate, continuous detector confidence for tracking purposes, tracking is not relying solely on the detector's final and discrete indication of a detection, and the flexibility for handling difficult situations is improved.

Fig. 3

EP 2 259 221 A1

**Description**

Field of the Invention

The present invention relates to a computer system and a method for tracking objects in video data. Specifically, the present invention relates to a computer system and a method for tracking mobile objects in a sequence of two-dimensional video frames, e.g. captured by a video camera, particularly by a monocular (static or moving) camera. More specifically, the present invention relates to a computer system and a method for tracking mobile objects which associate an object tracker with objects detected in the video frames, and employ particle filtering for tracking objects detected in the video frames by determining weights of importance for particles associated with an object tracker, and by propagating the particles using a motion model.

Background of the Invention

Multi-target tracking relates to the automatic detection and tracking of a variable number of objects (targets) in video data of complex scenes. Particularly, if a monocular (static or moving), uncalibrated camera is used to capture the video data, multi-target tracking poses challenging problems, since there are many sources of uncertainty for object locations, e.g., measurement noise, clutter, changing background, and significant occlusions. In order to cope with those difficulties, it has become increasingly popular to use tracking-by-detection approaches, as described by S. Avidan in "Ensemble tracking", CVPR, 2005; by H. Grabner and H, Bischof in "On-line boosting and vision", CVPR, 2006; by B. Leibe, K. Schindler, and L Van Cool in "Coupled detection and trajectory estimation for multi-object tracking", ICCV, 2007; by K. Okuma, A. Taleghani, N. De Freitas, J. Little, and D. Lowe in "A boosted particle filter. Multitarget detection and tracking", ECCV, 2004; and by B. Wu and R. Nevatia in "Detection and tracking of multiple, partially occluded humans by Bayesian combination of edgelet based part detectors". IJCV, 75(2):247-266, 2007. These approaches involve the continuous application of a detection algorithm in individual video frames and the association of detections across frames. The main challenges when using an object detector for tracking are that the resulting output is unreliable and sparse, i.e. detectors only deliver a discrete set of responses and usually yield false positives and missing detections. Multi-object tracking-by-detection algorithms which address the resulting data association problem by optimizing detection assignments over a larger temporal window have been described recently by M. Andriluka, S. Roth, and B. Schiele in "People-tracking-by detection and people-detection-by-tracking", CVPR, 2008; by J. Berclaz, F. Fleuret, and P. Fua in "Robust people tracking with global trajectory optimization", CVPR, 2006; by C. Huang, B. Wu, and R. Nevatia in "Robust object tracking by hierarchical association of detection responses", ECCV, 2008; by B. Leibe, K. Schindler, and L Van Gool in "Coupled detection and trajectory estimation for multi-object tracking", ICCV, 2007; and by A G. A Perera, C. Srinivas, A Hoogs, G. Brooksby, and W. Hu in "Multi-object tracking through simultaneous long occlusions and split-merge conditions", CVPR, 2006. However, such methods are often based on global information, thus not only relying on information from past frames. Hence, they are not suitable for time-critical online applications, where a delay is not acceptable

To better represent the state space uncertainty of a target, Particle Filters were introduced to the vision community by M. Isard and A Blake in "Condensation-conditional density propagation for visual tracking", IJCV, 29(1):5-28, 1998. Particle Filters or Sequential Monte Carlo methods, as described by A Doucet, N. De Freitas, and N. Gordon in "Sequential Monte Carlo methods in practice", Springer-Verlag, 2001, offer a framework for representing the tracking uncertainty in a Markovian manner by only considering information from past frames. Therefore, such an approach is more suitable for time-critical, on-line applications. Combining tracking-by-detection with particle filtering by using final detections to initialize color based tracker samples is described by K. Okuma. A. Taleghani, N. De Freitas, J. Little, and D. Lowe in "A boosted particle filter: Multitarget detection and tracking", ECCV, 2004; and by Y. Cai, N. de Freitas, and J. J. Little in "Robust visual tracking for multiple targets", ECCV, 2006. All of these approaches rely only on the final, sparse output from the object detector, i.e. the discrete indication of a detection (detected object).

Summary of the Invention

It is an object of this invention to provide an improved computer system and an improved method for tracking a variable number of (mobile) objects in a sequence of two-dimensional video frames by using particle filtering. In particular, it is an object of the present invention to provide a computer system and a method for tracking objects detected by an object detector in a sequence of two-dimensional video frames, which system and method use particle filters but are not limited to the final, sparse output from the object detector.

According to the present invention, at least some of these objects are achieved particularly through the features of the independent claims. In addition, further advantageous embodiments follow from the dependent claims and the description.

For tracking mobile objects in a sequence of two-dimensional video frames, e.g. stored or captured by a video camera, an object detector detects in the video frames objects of a defined object class, and an object tracker is associated with a detected object Specifically, at most, one object tracker is associated with one detected object, however, some detected objects may not be associated with an object tracker. For tracking the detected objects across the sequence of video frames, particle filtering is employed, i.e. weights of importance are determined for the particles associated with an object tracker, and the particles are propagated using a motion model.

According to the present invention, the above-mentioned objects are particularly achieved in that a detection confidence density is determined from the object detector for positions of the particles associated with an object tracker, and the weights of importance are determined for the particles based on the detection confidence density for the positions of the particles. In other words, the weights of importance (or particle weights) are determined based on a detector confidence term which indicates a detection confidence density for positions of the (previously propagated) particles associated with the respective object tracker. Thus, the output of the object detector is used for the observation model beyond its final and discrete indication of a detection, in that the intermediate, continuous confidence density of the object detector is exploited additionally for tracking purposes. Particularly, multi-person tracking builds upon the intermediate confidence density of state-of-the-art person (pedestrian) detectors and integrates it robustly into the observation model. In essence, the intermediate confidence density of the object detector is used to guide the tracker particles, together with individual high-confidence detections. In contrast to the prior art solutions which rely exclusively on the final, sparse output from the object detector, the present approach integrates the object detector itself into the tracking process by monitoring its continuous detection confidence and using it as a graded observation model. By forgoing the hard detection decision, flexibility of tracking for handling difficult situations is improved.

In a preferred embodiment, a classifier is trained in each case for the object trackers. The classifiers are evaluated for the objects detected by the object detector, and the object trackers are associated with a detected object based on the classifiers evaluated for the detected object Thus, an on-line (on the fly) classifier is trained for each target during runtime, and these instance-specific classifiers are used to resolve the data association between detected object and object tracker (target). For example, for multi-person tracking, a person-specific classifier is trained, in addition to a general person (pedestrian) detector, and used to evaluate each detection-target pair for data association. A tracking algorithm that uses on-line classifiers has been described by X. Song, J. Cui, H. Zha, and H. Zhao in "Vision-based multiple interacting targets tracking via on-line supervised learning", ECCV, 2008. However, this tracking algorithm relies on background subtraction instead of a person detector, and employs the classifiers only to resolve merge/split situations, but not for tracking-by-detection with (static or moving) cameras.

In another preferred embodiment, the classifiers trained for the object trackers are evaluated for the particles associated with an object tracker, and the weights of importance are determined for the particles based on the classifiers evaluated for the particles. In other words, the weights of importance are determined based on a classifier term which indicates a classifier trained for the object tracker and evaluated for the (previously propagated) particles associated with the respective object tracker, Thus, the instance-specific on-line classifiers trained for each target during runtime are used to adapt the weights of importance for the particles associated with an object tracker (target). For example, for multi-person tracking, a person-specific classifier is trained, in addition to a general person (pedestrian) detector, and used to weight the importance of the particles.

In an embodiment, a matching score is determined for each combination of detected object and object tracker based on velocity, direction of motion, and position of particles associated with the object tracker. Subsequently, the object trackers are associated with a detected object based on the matching score. Preferably, the object trackers are associated with a detected object using a greedy algorithm which selects from the combinations of detected object and object tracker a selected combination having the highest matching score, removes from the combinations those which comprise a detected object or object tracker included in the selected combination, and repeats the selection with the remaining combinations. In a variant, associations are only established, if the respective matching score exceeds a defined threshold. Particularly, in an embodiment where the matching score is further based on the classifiers trained for the object trackers and evaluated for the objects detected by the object detector, this greedy algorithm is based on an on-line trained classifier and a probabilistic gating function for reliable and (computing) efficient assignment of detections and trackers.

In a further embodiment, the weights of importance are determined for the particles associated with an object tracker based on the matching score for the object tracker and the detected object associated with the object tracker, and on a distance between the particles associated with the object tracker and the detected object associated with the object tracker. In other words, the weights of importance are determined based on a detection term which indicates a distance between the detected object and the (previously propagated) particles associated with the respective object tracker.

The weights of importance are thus determined for the particles associated with an object tracker based on a conditional likelihood of a new detected object associated with the object tracker, given the propagated particles associated with the object tracker. In a preferred combined approach, the conditional likelihood includes the detection term, the detector confidence term, and/or the classifier term.

In another embodiment, the detection confidence density for positions of the particles associated with a first object tracker is weighted depending on a presence of a second object tracker which is associated with particles located within a defined proximity of the particles associated with the first object tracker.

In addition to the computer system and the computer-implemented method for tracking (mobile) objects in a sequence of two-dimensional video frames, stored or captured by a camera, the present invention also relates to a computer program product comprising computer program code means for controlling one or more processors of a computer system, preferably a computer program product comprising a computer-readable medium containing the computer program code means therein. Preferably, the computer program code means are configured to control the processors of the computer system such that the computer system performs the steps of: detecting objects of a defined object class in a two-dimensional video frame; associating an object tracker with a detected object; employing particle filtering for tracking the detected objects across a sequence of video frames by determining weights of importance for the particles associated with an object tracker, and by propagating the particles using a motion model; determining from the object detector a detection confidence density for positions of the particles associated with an object tracker; and determining the weights of importance for the particles based on the detection confidence density for the positions of the particles.

Brief Description of the Drawings

The present invention will be explained in more detail, by way of example, with reference to the drawings in which:

Figure 1 shows a block diagram illustrating schematically a computer system for tracking mobile objects in video data provided by a (static or moving) camera.

Figure 2 shows a flow diagram illustrating an exemplary sequence of steps for tracking mobile objects in video data.

Figure 3 shows a data flow diagram illustrating schematically data flow and data dependency in the computer system and computer-implemented method for tracking objects in video frames.

Figures 4a and 4b show pictures of a subway scene which illustrate exemplary outputs from a feature-based object detector and a sliding window object detector, respectively.

Figures 5a and 5b show pictures of a street scene which illustrate the outcome of a detector confidence reliability function.

Figures 6a-6d show pictures of a street crossing scene which illustrate an example of tracking objects in a sequence of four video frames,

Figures 7a-7d show pictures of a subway station scene which illustrate an example of tracking objects in a sequence of four video frames.

Detailed Description of the Preferred Embodiments

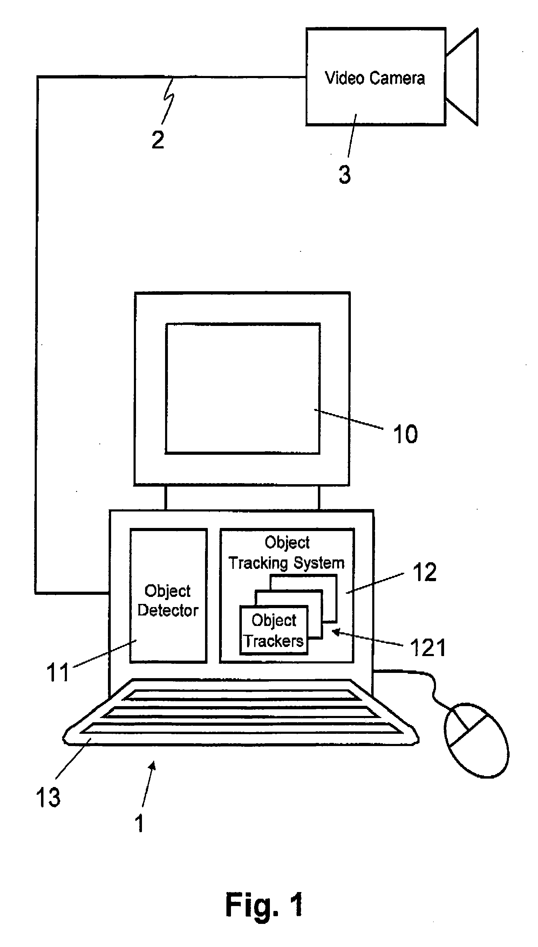

In Figure 1, reference numeral 1 refers to a computer system for tracking objects in video data, particularly, mobile objects in a sequence of two-dimensional video frames. Typically, the video data is captured by a video camera 3 and provided to computer system 1 via a communication link 2, e.g. including a wired and/or wireless communication network, e.g. as a continuous live data stream. Preferably, video camera 3 is a (static or moving) monocular camera providing no spatial or depth information. Computer system 1 is configured to process the video data on-line, in near real-time, i.e. within a defined maximum response time. One skilled in the art will understand, however, that recorded video data from a data store may also be processed off-line.

Computer system 1 includes one or more operative computers (e.g. a conventional PC or server) with one or more processors, data and program memory, a display 10, and operating elements 13 for data entry. As illustrated schematically in Figure 1, computer system 1 comprises an object detector 11 and an object tracking system 12. Object detector 11 and object tracking system 12 are functional modules which are implemented preferably as programmed software modules. The software modules are stored as computer program products on a computer readable medium connected removably or fixed to computer system 1. One skilled in the art will understand that, in alternative embodiments, the functional modules can be implemented fully or partly by way of (electronic) hardware components.

As illustrated in Figure 1, object tracking system 12 includes several object trackers 121. Depending on the embodiment, object trackers 121 are functional modules instantiated and initiated by object tracking system 12 and/or data structures generated and/or used by object tracking system 12. If the object trackers 121 are implemented as functional modules, they are instantiated in each case as separate and independent program modules which perform in each case tracking functions for an associated target object Otherwise, the object trackers 121 merely represent data structures for storing data related to a target object and generated through tracking functions performed by object tracking system 12,

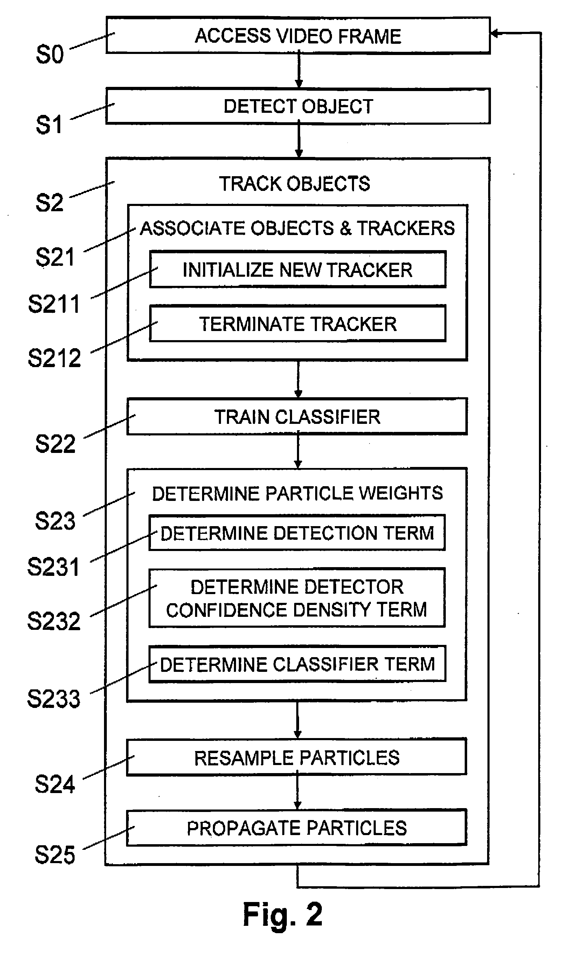

In the following paragraphs, described with reference to Figure 2 are possible sequences of steps performed by the functional modules for tracking objects in video data, particularly, mobile objects in a sequence of two-dimensional video frames.

In step S0 object detector 11 retrieves and/or accesses video data which was received, buffered, and/or stored, respectively, and which is representative of one to-dimensional video frame.

In step S1, object detector 11 detects in the video frame one or more (mobile) objects, preferably objects of a defined object class, e.g. a person or a vehicle.

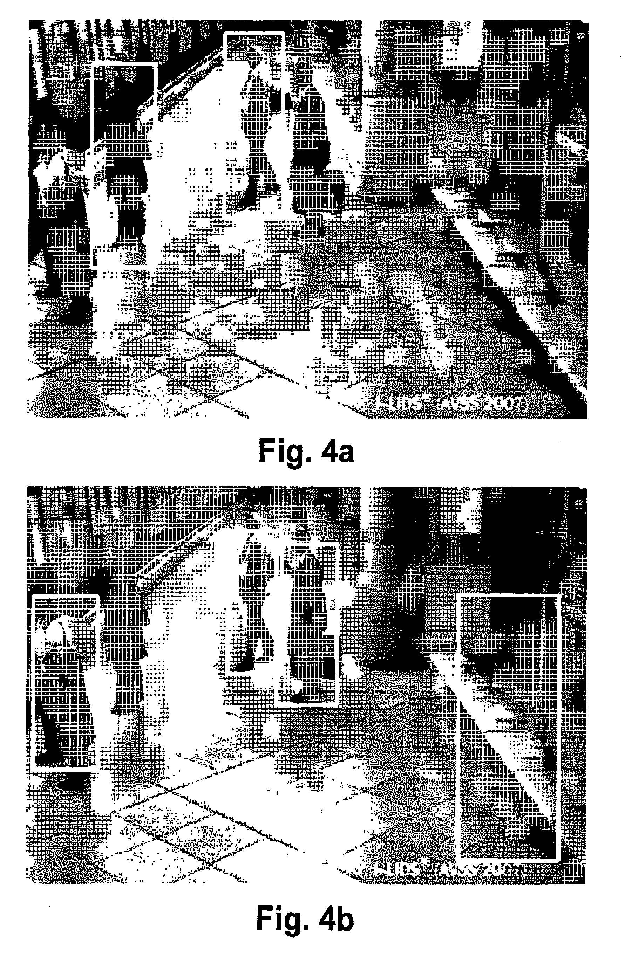

Preferably, (for detecting persons) object detector 11 employs a state-of-the-art (person) detector which builds up some form of (detector) confidence density at one stage of its pipeline. This is true for both sliding-window based detectors such as HOG, described by N. Dalal and B. Triggs in "Histograms of oriented gradients for human detection", CVPR, 2005, and for feature-based detectors such as ISM, described by B. Leibe, A Leonardis, and B. Schiele in "Robust object detection with interleaved categorization and segmentation", IJCV, 77(1-3):259-289, 2008. In the sliding-window case, this detector confidence density is implicitly sampled in a discrete 3D grid (location and scale) by evaluating the different detection windows with a classifier. In the ISM case, the detector confidence density is explicitly created in a bottom-up fashion through probabilistic votes cast by matching local features. In order to arrive at individual detections, both types of approaches try to find local maxima in the density volume and then apply some form of non-maximum suppression. This reduces the result set to a manageable number of high-quality hypotheses, but it also throws away potentially useful information. Figure 4a illustrates an exemplary output for ISM; whereas Figure 4b shows the output for the corresponding frame from HOG. As can be seen, there are situations where a detector does not yield a final detection, but a tracking algorithm could still be guided using the intermediate output. On the other hand, both detectors also show a high confidence density on certain background structures.

In step S2, object tracking system 12 tracks objects detected in the current and/or previous video frames using particle filtering.

Object tracking system 12 executes a tracking algorithm that is based on estimating the distribution of the state for each target by a particle filter. The state $x=\{x, y, u, v\}$ consists of the 2D image position $(x, y)$ and the velocity components $(u, v)$. Therefore, employed is the bootstrap filter as described by N. Gordon, D. Salmond, and A. Smith in "Novel approach to non-linear/non-Gaussian Bayesian state estimation", IEE Proc. F. Radar Signal Process., 140: 107-113, 1993, where the state transition density (or "prior kernel") is used as importance distribution to approximate the probability density function. For sequences with abrupt, fast camera motion, applied is iterative likelihood weighting, as described by S. J. McKenna and H. Nait-Charif in "Tracking human motion using auxiliary particle filters and iterated likelihood weighting", image Vision Computing, 25(6): 852-862, 2007. For details about particle filtering, reference is made to the publication of A Doucet, N. De Freitas, and N. Gordon in "Sequential Monte Carlo methods in practice", Springer-Verlag, 2001. The importance weight for each particle $i$ at time step $t$ is then described by:

$$w_t^{(i)} \quad \propto \quad w_{t-1}^{(i)} \cdot p(y_t | x_t^{(i)}) \qquad (1)$$

Since re-sampling is carried out in each time step using a fixed number of $N$ particles, $N$ is a constant and can be ignored. Thus, equation (1) is reduced to the conditional likelihood of a new observation given the propagated particles, which is estimated below in the context of step S23.

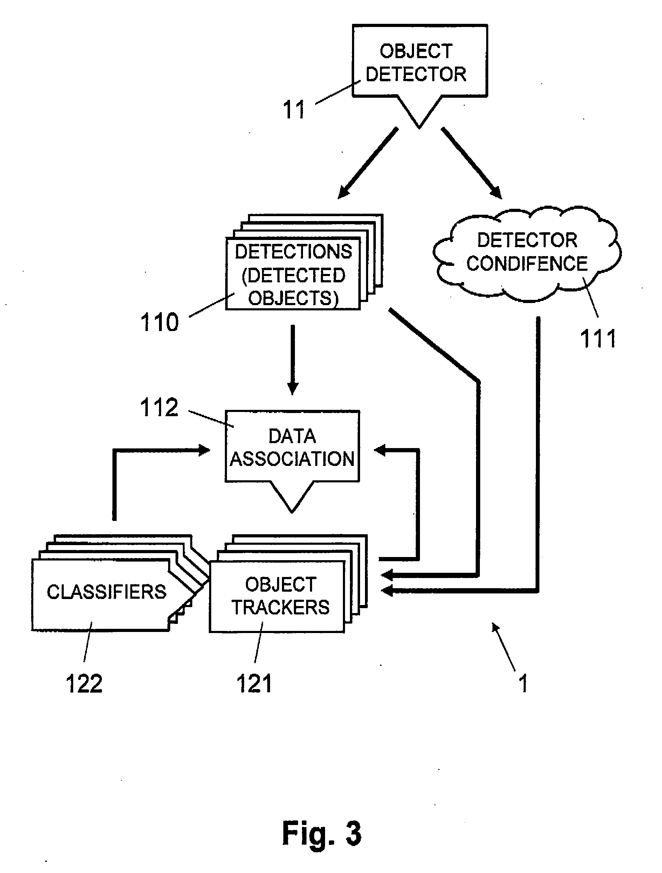

In step S21, object tracking system 12 forms (data) associations 112 between an object tracker 121 and a detected object (detection 110 in Figure 3). In order to decide which detection 110 should guide which object tracker 121, a data association problem is solved, assigning at most one detection 110 (detected object) to at most one target (object tracker 121 or object tracked by object tracker 121, respectively), The optimal single-frame assignment can be obtained by the Hungarian algorithm described by H. Kuhn, in "The Hungarian method for the assignment problem", Naval Research Logistics Quaterly, 2:83-87, 1955. Preferably, however, the greedy algorithm described below is employed preferably as it achieves equivalent results at lower computational cost.

According to this greedy algorithm, the matching algorithm works as follows: First, a matching score matrix $S$ for each pair $(tr, d)$ of object tracker $tr$ and detected object (detection) $d$ is computed as described below. Then, the pair *(tr*, d*)* with maximum score is iteratively selected, and the rows and columns belonging to tracker *tr* and detection *d* in *S* are deleted. This is repeated until no further valid pair is available. Finally, only the associated detections with matching score above a threshold are used, ensuring that a selected detection actually is a good match to a target, Consequently, the chances are high that often no detection is associated with a target, but if one is, it can be used to strongly influence the object tracker 121.

The data association method evaluates a matching function for each tracker-detection pair *(tr, d)* - the higher the score, the better the match between detection 110 and tracking target (object tracker 121 The matching function *s (tr, d)* evaluates the distance between the detection *d* and each particle *p* of tracker *tr*. It employs a classifier $c_{tr}(d)$ trained for *tr* and evaluated for *d* (see description of classifier in the context of step S22):

$$s(tr, d) = g(tr, d) \cdot \left( c_{tr}(d) + \alpha \cdot \sum_{p \in tr}^{N} p_{\mathcal{N}}(d - p) \right),$$

$$(2)$$

Where $p_N(d-P) \sim N(d-p;0, \sigma^2_{det})$ denotes the Normal distribution evaluated for the distance between *d* and *p*, and *g(tr, d)* is a gating function described next

Not only the distance of a detection to the tracker is important, but also its location with respect to velocity and motion direction of the target, Therefore, a probabilistic gating function *g(tr, d)* is used to additionally assess each detection. The gating function *g(tr, d)* consists of the product of two probabilities, both drawn from Normal distributions.

$$g(tr, d) = p(size_d | tr) p(pos_d | tr)$$
$$= \begin{cases} p_{\mathcal{N}}\left(\frac{size_{tr} - size_d}{size_{tr}}\right) \cdot p_{\mathcal{N}}(|d - tr|) & \text{if } |v_{tr}| < \tau_v \\ p_{\mathcal{N}}\left(\frac{size_{tr} - size_d}{size_{tr}}\right) \cdot p_{\mathcal{N}}(dist(d, v_{tr})) & \text{otherwise.} \end{cases}$$
$$(3)$$

The first factor measures the agreement between the sizes of target and detection, The second term implements the intuition that fast moving objects cannot change their course abruptly because of their inertia. Therefore, it depends on the velocity of the target; if it is below a threshold $\tau_v$, the velocity is ignored and the term is proportional to the distance from the tracker position *tr* to the detection *d*. In this case of an (almost) motionless target, the isolines of the function are radial. Otherwise, the second term depends on *dist(d, $V_{tr}$)*, which is the shortest distance between the detection *d* and the line given by the motion direction $v_{tr}$ = *(u, v)* of the object tracker 121. The variance for the second term is chosen such that it is proportional to the distance from the object tracker 121 to the detection projected to $v_{tr}$ In this case, the isolines of equation (3) form a 2D cone. The variance is made inversely proportional to the velocity, such that the angle of the 2D cone is smaller, the higher the speed of a target is.

In step S211, object tracking system 12 initializes (and, if applicable, instantiates) a new object tracker 121.

Object detection yields fully automatic initialization, The algorithm initializes a new object tracker 121 for an object that has subsequent detections with overlapping bounding boxes and is neither occluded nor associated to an already existing object tracker 121. In order to avoid persistent false positives from similar-looking background structures (such as windows, doors, or trees), object trackers are initialized only from detections that appear in a zone along the image (video frame) borders for sequences where this is reasonable. The initial sample positions are drawn from a Normal distribution centered at the detection center. The initial size corresponds to the detection size, and the motion direction is set to be orthogonal to the closest image border.

Although represented by a (possibly multi-modal) distribution, a single position of the tracking target (object tracker 121) is sometimes required (e.g. for visualization). For that purpose, the position is estimated by the strongest mode of the distribution, found using mean-shift Instead of including the size of the target in the state space of the particles, the target size is set to the average of the last three associated detections. In practical implementation experiments, this yields better results, possibly because of the exponentially growing number of particles necessary for estimating a larger state space.

In step S212, object tracking system 12 terminates an object tracker 121 that was not associated with a detected object for a defined number of consecutive video frames, for example. Thus, an object tracker 121 only "survives" a limited number of frames without associated detection 110 and is then automatically terminated.

In step S22, object tracking system 12 trains classifiers 122 assigned in each case to one of the object trackers 121.

To assess the similarity of a tracker-detection pair, trained is a boosted classifier of weak learners for each tracking target (object tracker 121 The classifier 110 is similar to the one described by H. Grabner and H. Bischof in "On-line boosting and vision", CVPR, 2006, and is trained on-line (i.e. on the-fly) on one target against all others. Patches used as positive training examples are sampled from the bounding box of the associated detection. The negative training set is sampled from nearby targets, augmented by background patches. The classifier 110 is only updated on non-overlapping detections. After each update step, kept is a constant number of the most discriminative weak learners. The output of the classifier 110 is linearly scaled to the range [-1, 1]. The weak learners (feature types) are selected by evaluating the classifier 110 for different combinations of color and appearance features.

To select features for the boosted classifier (i.e., number, type, combination of features), evaluated is the ability of the classifiers 110 to distinguish between the correct target and all other targets. For this purpose, the classifiers 110 are compared on different sequences using annotated ground truth, Ideally, a classifier 110 returns a score of "+1" for the bounding box of the target it is trained for and "-1" for all other input

In step S23, object tracking system 12 determines weights of importance (relevance) for the (propagated) particles (i.e. particle weights) associated in each case with one of the object trackers 121.

To compute the weight $W_{tr,p}$ for a particle $p$ of the tracker $tr$, the algorithm estimates the conditional likelihood of the new observation given the propagated particle. For this purpose, combined are different sources of information, namely the associated detection $d^*$, the intermediate output of the detection algorithm (implemented by the object detector 11), and the output of the classifier $c_{tr}$:

$$w_{tr,p} = p\big(y_t \big| x_t^{(i)}\big) = \qquad (6)$$

$$\underbrace{\beta \cdot \mathcal{I}(tr) \cdot p_{\mathcal{N}}(p - d^*)}_{\text{detection}} + \underbrace{\gamma \cdot d_c(p) \cdot p_o(tr)}_{\text{det. confidence density}} + \underbrace{\eta \cdot c_{tr}(p)}_{\text{classifier}} \qquad (4)$$

where the parameters $\beta$, $\gamma$, $\eta$ are set experimentally (for example, in a test embodiment, the parameters $\beta$, $\gamma$, $\eta$ were kept fixed and only $\gamma$ was adapted for some sequences). Each term is described below in detail,

In step S231, object tracking system 12 calculates a detection term which indicates the distance between the detected object and the (propagated) particles associated with an object tracker 121.

Specifically, the detection term computes the distance between the particle $p$ and the associated detection $d^*$, evaluated under a Normal distribution $p_N$. $I(tr)$ is an indicator function that returns "1" if a detection was associated to the tracker and "0° otherwise. When a matching detection is found, this term robustly guides the particles.

In step 5232, object tracking system 12 calculates a detector confidence density term which indicates the detection confidence density for positions of the (propagated) particles associated with an object tracker 121.

Specifically, the detector confidence density term evaluates the intermediate output of the object detector 11 by computing the detector confidence density $d_c(p)$ at the particle position. To estimate $d_c(p)$ for the ISM detector, computed is the local density $\rho$ in the Hough voting space using a cubical kernel adapted to the target object size and scale it with f = 1 - exp(-p) to [0, 1]. For the HOG detector, $d_c(p)$ corresponds to the raw SVM confidence output before applying non-maximum suppression.

Unfortunately, the detector confidence density is not always reliable; often, an erroneously high value is caused by background structures (e.g. see Figures 4a and 4b). To assess its reliability, the algorithm therefore performs inter-object occlusion reasoning using the following rationale: if another tracker $tr'$ is nearby that is associated with a detection, the detector confidence density around this image location is most probably caused by the foreground and not by background structure. Consequently, the object detector 11 probably did not find both detections 110 because of the occlusion, In this case, it is assumed that the detection confidence density is meaningful in this image area and can thus be used to guide the object tracker 121.

To assess the reliability of the detector confidence density, the tracking algorithm evaluates a function,

$$p_0(tr) = \begin{cases} 1 & \text{if } \mathcal{I}(tr) = 1 \\ \max_{tr':\mathcal{I}(tr')=1} p_{\mathcal{N}}(tr - tr') & \text{elif } \exists \mathcal{I}(tr') = 1 \\ 0 & \text{else} \end{cases} \tag{5}$$

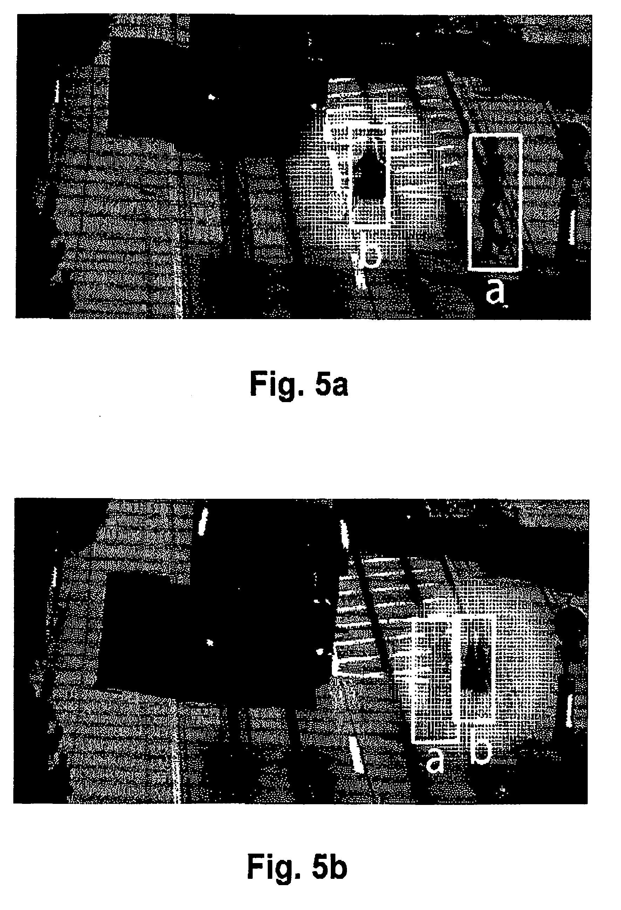

which is used in (4) to weight the influence of the detector confidence density. The closer $tr'$ is, the more reliable is the detector output at the position of tracker $tr$. In Figures 5a, 5b, the function values are illustrated for the object tracker 121 of person "a" entering the scene from the right and passing person "b" on its way. As is illustrated in Figure 5b, the detector confidence reliability function of equation (5) evaluated for the object tracker 121 associated with person "a" returns a high value, if another object tracker 121 (associated with person "b") is nearby.

In step 5233, object tracking system 12 calculates a classifier term representative of a classifier 122 trained for the object tracker 121 and evaluated for the (propagated) particles associated with the object tracker 121.

For the classifier term of equation (4), the classifier trained for the target $tr$ is evaluated for the image patch at the particle location with the corresponding size. If available, this term uses color information to assess the new particle position and complements the terms from the object detector output. While other tracking methods are purely based on such classifier output, this adds additional robustness to the present particle filter approach. In addition, the combination of generic category knowledge with object(person)-specific information makes the present approach more robust to classifier drift than prior art solutions such as the one described by H. Grabner and H. Bischof in "On-line boosting and vision", CVPR, 2006, for example.

In step S24, object tracking system 12 resamples the particles associated with an object tracker 121.

In step S25, object tracking system 12 determines propagated particles by propagating the particles associated with an object tracker 121 using a motion model.

Specifically, to propagate the particles, a constant velocity motion model is used:

$$(x,y)_t = (x,y)_{t-1} + (u,v)_{t-1} \cdot \Delta t + \varepsilon_{(x,y)} \tag{6}$$

$$(u,v)_t = (u,v)_{t-1} + \varepsilon_{(u,v)} \tag{7}$$

The process noise $\varepsilon_{(x,y)}$, $\varepsilon_{(u,v)}$ for each state variable is independently drawn from zero-mean Normal distributions. The variance $\sigma^2_{(x,y)}$ for the position noise remains constant throughout the video frames, whereas the variance $\sigma^2_{(u,v)}$ for the velocity noise is inversely proportional to the number of successfully tracked video frames. Hence, the longer a target is tracked successfully, the less the particles are spread. $\Delta t$ is dependent on the frame-rate of the sequence. The size of the target is estimated as described above in the context of step S211.

Subsequently, computer system 1 continues processing the next video frame in step S1.

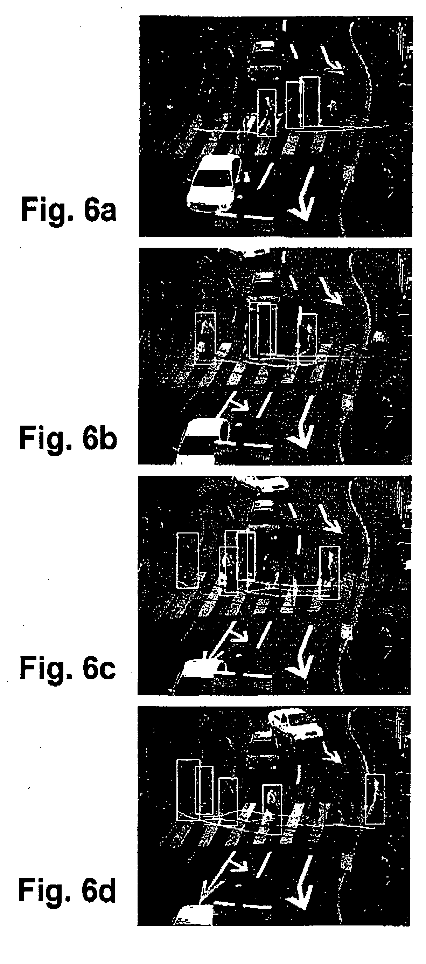

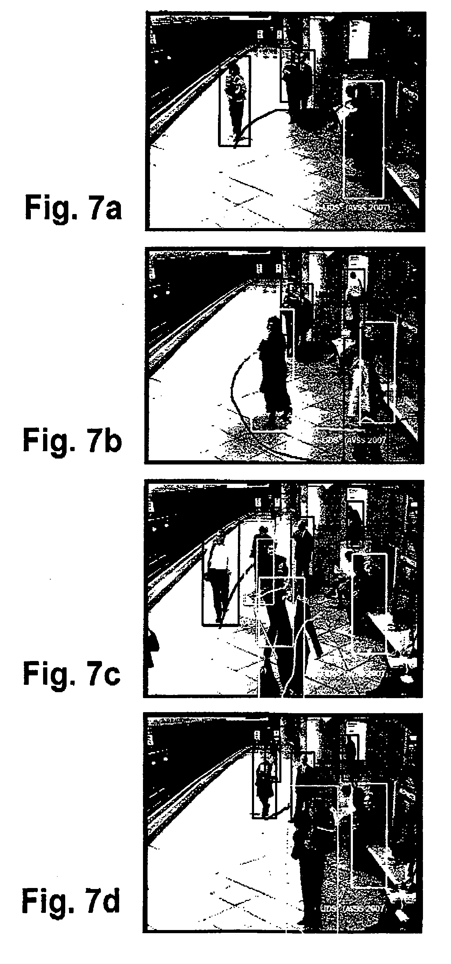

Figures 6a-6d show a sequence of four video frames of a street crossing scene using an ISM object detector; Figures 7a-7d show a sequence of four video frames of a subway station scene using a HOG object detector. In Figures 6a-6d and 7a-7d, tracked objects (targets) associated with an object tracker 121 are indicated by a box In all sequences, only 2D information is used, without additional scene knowledge such as a ground plane calibration or entry/exit zones.

All parameters were set experimentally, but typically remained identical for all sequences, This was the case for the variances $\sigma^2$ in equations (2)-(5), as well as for $\beta$, $\eta$ in equation (4). $\gamma$ was increased for the street crossing scene to overcome long-lasting overlaps between detections. Overall, $\beta$, $\gamma$, $\eta$ were chosen such that the ratios between the respective terms are about 20:2:1 for an object tracker with associated detection. On average, a detection 110 is selected and associated to an object tracker 121 every 2-10 frames, depending on the sequence, To handle abrupt motion changes in sports sequences such as soccer, football or ice hockey, $\sigma^2$ was increased in equations (6), (7) to make the motion model more flexible.

Figure 3 shows a schematic overview of the data flow and data dependency between functional and/or data components of computer system 1. As illustrated in Figure 3, object detector 11 generates detections 110 and provides intermediate detector confidence density 111. Data associations 112 are established between detections 110 and object trackers 121. The data associations 112 are determined based on detections 110 (detected objects), object trackers 121 (target object), and classifiers 122 associated with the object trackers 121. Furthermore, the object trackers 121 are influenced by the detector confidence 111.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

**Claims**

1. A computer system (1) for tracking mobile objects in a sequence of two-dimensional video frames, the system (1) comprising:

   an object detector (11) configured to detect in the video frames objects of a defined object class; and
   an object tracking system (12) configured to associate an object tracker (121) with a detected object (110), and to employ particle filtering for tracking the detected objects (110) by determining weights of importance for the particles associated with an object tracker (121), and by propagating the particles using a motion model;
   wherein the object tracking system (12) is configured to determine from the object detector (11) a detection confidence density (111) for positions of the particles associated with an object tracker (121), and to determine the weights of importance based on the detection confidence density (111) for the positions of the particles.

2. The system (1) of claim 1, wherein the object tracking system (12) is configured to train for the object trackers (121) in each case a classifier (122), to evaluate the classifiers (122) for the objects detected by the object detector (11), and to associate the object trackers (121) with a detected object (110) based on the classifiers (122) evaluated for the detected object (110).

3. The system (1) of one of claims 1 or 2, wherein the object tracking system (12) is configured to train for the object trackers (121) in each case a classifier (122), to evaluate the classifiers (122) for the particles associated with an object tracker (121), and to determine the weights of importance based on the classifiers (122) evaluated for the particles.

4. The system (1) of one of claims 1 to 3, wherein the object tracking system (12) is configured to determine a matching score for each combination of detected object (110) and object tracker (121) based on velocity, direction of motion, and position of particles associated with the object tracker (121), and to associate the object trackers (121) with a detected object (110) based on the matching score.

5. The system (1) of claim 4, wherein the object tracking system (12) is configured to determine the weights of importance for the particles associated with an object tracker (121) based on a distance between the particles associated with the object tracker (121) and the detected object (110) associated with the object tracker (121).

6. The system (1) of claim one of claims 1 to 5, wherein the object tracking system (12) is configured to associate the object trackers (121) with a detected object (110) by selecting from combinations of detected object (110) and object tracker (121) a selected combination having a highest matching score, by removing from the combinations those which comprise a detected object (110) or object tracker (121) included in the selected combination, and by repeating the selecting with the remaining combinations.

7. The system (1) of one of claims 1 to 6, wherein the object tracking system (12) is configured to weight the detection confidence density (111) for positions of the particles associated with a first object tracker (121) depending on a presence of a second object tracker (121) which is associated with particles located within a defined proximity of the particles associated with the first abject tracker (121).

8. A computer-implemented method of tracking mobile objects in a sequence of two-dimensional video frames, the method comprising:

detecting (S1) by an object detector (11) in the video frames objects of a defined object class;

associating (521) an object tracker (121) with a detected object (110); and

employing particle filtering for tracking the detected objects (110) by determining (S23) weights of importance for the particles associated with an object tracker (121),

and by propagating (S25) the particles using a motion model;

wherein the method further comprises:

determining from the object detector (11) a detection confidence density (111) for positions of the particles associated with an object tracker (121); and

determining (S23) the weights of importance for the particles based on the detection confidence density (111) for the positions of the particles.

9. The method of claim 8, wherein the method further comprises training (522) for the object trackers (121) in each case a classifier (122), and evaluating the classifiers (122) for the objects detected by the object detector (11); and associating (521) the object trackers (121) with a detected object (110) is based on the classifiers (122) evaluated for the detected object (110).

10. The method of one of claims 8 or 9, wherein the method further comprises training (S22) for the object trackers (121) in each case a classifier (122), and evaluating the classifiers (122) for the particles associated with an object tracker (121); and determining (S23) the weights of importance for the particles is based on the classifiers (122) evaluated for the particles.

11. The method of one of claims 8 to 10, wherein the method further comprises determining a matching score for each combination of detected object (110) and object tracker (121) based on velocity, direction of motion, and position of particles associated with the object tracker (121); and associating (S21) the object trackers (121) with a detected object (110) is based on the matching score.

12. The method of claim 11, wherein determining (523) the weights of importance for the particles associated with an object tracker (121) is based on a distance between the particles associated with the object tracker (121) and the detected object (110) associated with the object tracker (121).

13. The method of one of claims 8 to 12, wherein associating (521) the object trackers (121) with a detected object (110) includes selecting from combinations of detected object (110) and object tracker (121) a selected combination having a highest matching score, removing from the combinations those which comprise a detected object (110) or object tracker (121) included in the selected combination, and repeating the selecting with the remaining combinations.

14. The method of one of claims 8 to 13, wherein the method further comprises weighting the detection confidence density (111) for positions of the particles associated with a first object tracker (121) depending on a presence of a second object tracker (121) which is associated with particles located within a defined proximity of the particles associated with the first object tracker (121).

15. A computer program product comprising a computer-readable medium including computer program code means for controlling one or more processors of a computer system (1) such that the computer system (1) performs the steps of

detecting (S1) objects of a defined object class in a two-dimensional video frame;

associating (S21) an object tracker (121) with a detected object (110);

employing particle filtering for tracking the detected objects (110) across a sequence of video frames by determining (523) weights of importance for the particles associated with an object tracker (121), and by propagating the particles using a motion model;

determining from the object detector (11) a detection confidence density (111) for positions of the particles associated with an object tracker (121); and

determining (523) the weights of importance for the particles based on the detection confidence density (111) for the positions of the particles.

Video Camera

3

10

Object
Tracking System

12

Object
Detector

Object
Trackers

121

11

13

1

# Fig. 1

**Fig. 2**

**Fig. 3**

**Fig. 4a**

**Fig. 4b**

**Fig. 5a**

**Fig. 5b**

Fig. 6a

Fig. 6b

Fig. 6c

Fig. 6d

Fig. 7a

Fig. 7b

Fig. 7c

Fig. 7d

Europäisches
Patentamt
European
Patent Office
Office européen
des brevets

**EUROPEAN SEARCH REPORT**

Application Number

EP 09 00 7346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN LI ET AL: "Tsinghua Face Detection and Tracking for CLEAR 2007 Evaluation" MULTIMODAL TECHNOLOGIES FOR PERCEPTION OF HUMANS; [LECTURE NOTES IN COMPUTER SCIENCE], SPRINGER BERLIN HEIDELBERG, BERLIN, HEIDELBERG, vol. 4625, 8 May 2007 (2007-05-08), pages 138-147, XP019089313 ISBN: 978-3-540-68584-5 | 1,8,15 | INV. G06T7/20 |
| Y | * abstract * | 2,6,9,13 | |
| A | * sections 1, 2 * | 3-5,7, 10-12,14 | |
| X | YUAN LI ET AL: "Robust Head Tracking Based on a Multi-State Particle Filter" AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE, 10 April 2006 (2006-04-10), pages 335-340, XP010911630 ISBN: 978-0-7695-2503-7 * abstract * * section 3 * * table 1 * | 1,8,15 | |
| | | | TECHNICAL FIELDS SEARCHED (IPC) |
| | | | G06T G06K |
| A | MIKOLAJCZYK K ET AL: "Face detection and tracking in a video by propagating detection probabilities" IEEE TRANSACTIONS ON PATTERN ANALYSIS AND MACHINE INTELLIGENCE, IEEE SERVICE CENTER, LOS ALAMITOS, CA, US, vol. 25, no. 10, 1 October 2003 (2003-10-01), pages 1215-1228, XP011101847 ISSN: 0162-8828 * abstract * * section 4.1 * | 1,8,15 | |

-/--

The present search report has been drawn up for all claims

| Place of search | Date of completion of the search | Examiner |
|---|---|---|
| Munich | 21 October 2009 | Engels, Angela |

EPO FORM 1503 03.82 (P04C01)

EP 2 259 221 A1

Europäisches
Patentamt

European
Patent Office

Office européen
des brevets

# EUROPEAN SEARCH REPORT

**Application Number**

EP 09 00 7346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | YIZHENG CAI ET AL: "Robust Visual Tracking for Multiple Targets" COMPUTER VISION - ECCV 2006 LECTURE NOTES IN COMPUTER SCIENCE;;LNCS, SPRINGER, BERLIN, DE, vol. 3954, 1 January 2006 (2006-01-01), pages 107-118, XP019036574 ISBN: 978-3-540-33838-3 * abstract * * section 4.1 * ----- | 1,8,15 | |
| D,A | KENJI OKUMA ET AL: "A Boosted Particle Filter: Multitarget Detection and Tracking" COMPUTER VISION - ECCV 2004; [LECTURE NOTES IN COMPUTER SCIENCE;;LNCS], SPRINGER-VERLAG, BERLIN/HEIDELBERG, vol. 3021, 22 April 2004 (2004-04-22), pages 28-39, XP019005790 ISBN: 978-3-540-21984-2 * abstract * ----- | 1,8,15 | |
| Y | XUAN SONG ET AL: "Vision-Based Multiple Interacting Targets Tracking via On-Line Supervised Learning" COMPUTER VISION Â ECCV 2008; [LECTURE NOTES IN COMPUTER SCIENCE], SPRINGER BERLIN HEIDELBERG, BERLIN, HEIDELBERG, vol. 5304, 12 October 2008 (2008-10-12), pages 642-655, XP019109292 ISBN: 978-3-540-88689-1 * abstract * * sections 4, 5 * ----- | 2,6,9,13 | TECHNICAL FIELDS SEARCHED (IPC) |

The present search report has been drawn up for all claims

| Place of search | Date of completion of the search | Examiner |
|---|---|---|
| Munich | 21 October 2009 | Engels, Angela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. Avidan.** Ensemble tracking. *CVPR,* 2005
- **H. Grabner ; H, Bischof.** On-line boosting and vision. *CVPR,* 2006
- **B. Leibe ; K. Schindler ; L Van Cool.** Coupled detection and trajectory estimation for multi-object tracking. *ICCV,* 2007
- **K. Okuma ; A. Taleghani ; N. De Freitas ; J. Little ; D. Lowe.** A boosted particle filter. Multitarget detection and tracking. *ECCV,* 2004
- **B. Wu ; R. Nevatia.** Detection and tracking of multiple, partially occluded humans by Bayesian combination of edgelet based part detectors. *IJCV,* 2007, vol. 75 (2), 247-266
- **M. Andriluka ; S. Roth ; B. Schiele.** People-tracking-by detection and people-detection-by-tracking. *CVPR,* 2008
- **J. Berclaz ; F. Fleuret ; P. Fua.** Robust people tracking with global trajectory optimization. *CVPR,* 2006
- **C. Huang ; B. Wu ; R. Nevatia.** Robust object tracking by hierarchical association of detection responses. *ECCV,* 2008
- **B. Leibe ; K. Schindler ; L Van Gool.** Coupled detection and trajectory estimation for multi-object tracking. *ICCV,* 2007
- **A G. A Perera ; C. Srinivas ; A Hoogs ; G. Brooksby ; W. Hu.** Multi-object tracking through simultaneous long occlusions and split-merge conditions. *CVPR,* 2006
- **M. Isard ; A Blake.** Condensation-conditional density propagation for visual tracking. *IJCV,* 1998, vol. 29 (1), 5-28

- **A Doucet ; N. De Freitas ; N. Gordon.** Sequential Monte Carlo methods in practice. Springer-Verlag, 2001
- **K. Okuma ; A. Taleghani ; N. De Freitas ; J. Little ; D. Lowe.** A boosted particle filter: Multitarget detection and tracking. *ECCV,* 2004
- **Y. Cai ; N. de Freitas ; J. J. Little.** Robust visual tracking for multiple targets. *ECCV,* 2006
- **X. Song ; J. Cui ; H. Zha ; H. Zhao.** Vision-based multiple interacting targets tracking via on-line supervised leaming. *ECCV,* 2008
- **N. Dalal ; B. Triggs.** Histograms of oriented gradients for human detection. *CVPR,* 2005
- **B. Leibe ; A Leonardis ; B. Schiele.** Robust object detection with interleaved categorization and segmentation. *IJCV,* 2008, vol. 77 (1-3), 259-289
- **N. Gordon ; D. Salmond ; A. Smith.** Novel approach to non-linear/non-Gaussian Bayesian state estimation. *IEE Proc. F. Radar Signal Process.,* 1993, vol. 140, 107-113
- **S. J. McKenna ; H. Nait-Charif.** Tracking human motion using auxiliary particle filters and iterated likelihood weighting. *image Vision Computing,* 2007, vol. 25 (6), 852-862
- **H. Kuhn.** The Hungarian method for the assignment problem. Naval Research Logistics Quaterly, 1955, vol. 2, 83-87
- **H. Grabner ; H. Bischof.** On-line boosting and vision. *CVPR,* 2006